# EUROPEAN PATENT SPECIFICATION

(11) **EP 3 383 819 B1**
(45) Date of publication and mention of the grant of the patent: **04.02.2026**
(21) Application number: 16831515.8
(22) Date of filing: 01.12.2016
(51) Int. Cl.: C04B 28/02

(54) **MIXTURE FOR MANUFACTURING STONE PRODUCTS AND METHOD FOR ITS PRODUCTION**
MISCHUNG ZUR HERSTELLUNG VON STEINPRODUKTEN UND VERFAHREN ZU DEREN HERSTELLUNG
MÉLANGE POUR LA FABRICATION DE PRODUITS EN PIERRE ET SON PROCÉDÉ DE FABRICATION

(30) Priority: 03.12.2015 IT UB20156270
(43) Date of publication of application: 10.10.2018
(73) Proprietor: Pace Gioacchino, 80075 Forio (NA) (IT)
(72) Inventor: PACE, Gioacchino, 80075 Forio (NA) (IT)
(74) Representative: Maiello, Helenio Francesco
(86) International application number: PCT/IB2016/057238
(87) International publication number: WO 2017/093919

(56) References cited:
- CN-A- 1 887 782
- ES-A1- 2 174 687
- KR-A- 20020 088 720
- MX-A- PA04 011 180

## Description

### Technical Field

The present invention finds application in the technical field of working of stone and stone material in general and has for object a mixture for manufacturing stone products containing Ischia green tuff.

The invention has also for object a method for producing the above mixture and the materials containing the mixture.

### State of the art

Ischia green stone, also known as green tuff. is a stone of pozzolan origin, light green or gray-green colored, typical of the Ischia island.

Ischia green tuff comes from the eruption of the volcano Epomeo and its re-emergence from the see that have given the typical color.

Thanks to its peculiar malleability, in the past the green tuff has been used both for the production of various kinds of artefacts and to realize wall structures, such as dry walls, through its extraction directly from the blocks present on the island.

Currently, for obvious reasons of protecting nature and landscape, it is not possible to extract tuff directly from the rocks on the island.

Therefore, to reproduce the particular chromatic effect of green tuff it is necessary to use substitutes of lesser quality or mixtures containing green tuff fragments, resulting in the production of manufactured articles of poor aesthetic value and low malleability.

Finally, also the traditional products composed entirely of green tuff not have high properties of resistance as they are easily subject to wear and crumbling, and also generally have a somewhat rough appearance.

ES2174687 discloses a mixture for manufacturing stone products which incorporates among its elements volcanic material (lapilli) mixed with water, cementitious binder and other binding elements.

The object of this mixture is to obtain an artificial product that is as much similar to a natural product starting from a highly available base material. For this purpose, an amount of 30-34% of volcanic lapilli is introduced in the mixture.

The use of a similar percentage of the granular material involves the need to use a high amount of other aggregating materials, such as earth (27-30%) and sand (4-5.5%), so having an aesthetically and mechanically poor product.

### Scope of the invention

The object of the present invention is to overcome the above mentioned drawbacks, by providing a mixture for stone products made of Ischia green tuff which is particular efficient and cost-effective.

A particular object is to provide a mixture for stone products using Ischia green tuff not directly resulting from the extraction form blocks, but which has the same aesthetic quality and the typical color of this stone so as to obtain a high quality product while preserving the landscape and the environment.

Still another object is to provide a mixture for Ischia green tuff based stone product that has properties of workability and increased structural strength compared to the green tuff normally present in nature.

Not the last object is to provide a method for producing a mixture for Ischia green tuff based stone products which is particularly simple and quick, as well as economic, and which ensures the production of a mixture with high malleability, to make products of any kind and shape.

These objects, as well as others which will become more apparent hereinafter, are achieved by a mixture for stone products that, according with claim 1, comprises a first predetermined amount of Ischia green tuff in granular form with granules having an average size between 0,01mm and 3cm, said granules being blended with a second amount of a second granular material selected in the group of volcanic origin materials and with a particle size substantially similar to that of said green tuff granules, said green tuff granules being bound to said second granular material with a third predetermined amount of cementitious binder, said mixture further comprising a fourth predetermined amount of at least one green pigment.

Thanks to this combination of features it is possible to get a mixture containing Ischia green tuff not obtained directly from crushing large rocks but allowing product made from such mixture to maintain the aesthetic appearance of artifacts made from blocks.

The mixture allows to obtain articles using a material derived from the waste of other workings, in particular of Ischia green tuff not directly resulting from the extraction of the blocks, but which preserve the same aesthetic quality and the typical color so as to obtain a high product quality.

Furthermore, the use of two different granular materials with comparable grain sizes allows to reduce the amount of the more valuable material but at the same time allows to obtain in any case a mixture of different granular materials and with similar origin to have a conglomerate product homogeneous both structurally and aesthetically.

Conveniently, the green tuff granules may be present with an amount comprised between 20% and 50% of the total weight of the mixture.

Moreover, the second granular material may be suitably selected in the group of volcanic materials with a granulometry substantially similar to that of said green tuff granules and with a percentage comprised between 1% and 10% of the total weight of the mixture.

In this way, the mixture of granular materials different with each other but still of similar origin allow to obtain a conglomerate product homogeneous both structurally and aesthetically.

Advantageously, the mixture may comprise microsilicate in an amount between 0.5% and 3% of the total weight of the mixture.

In this way, due to the microscopic size of microsilicate and reactions with other elements that develop in response to, for example, interactions between the granular materials and the water or following hydration of the binders, it will be possible to fill the gaps formed between the granules and reduce the porosity of the granular materials, giving the finished product increased impermeability and high properties of mechanical resistance and durability, in particular greater resistance to wear and crumbling.

Suitably, the mixture may also comprise one or more thickening agents selected from the group comprising cellulose derivatives and starch, derivatives for building, in percentage less than 1% of the total weight of the mixture.

Such materials improve the workability and the malleability of the mixture allowing to realize a wide range of manufactured articles of different shapes and sizes.

According to a further aspect of the invention there is provided a method for producing a mixture for stone product containing Ischia green tuff, according with claim 8.

Advantageous embodiments of the invention are obtained in accordance with the dependent claims.

### Brief disclosure of the drawings

Further features and advantages of the invention will become more apparent in light of the detailed description of preferred but not exclusive embodiments of the mixture and of the method according to the invention, shown by way of non-limiting example with the aid of the accompanying drawing table wherein:

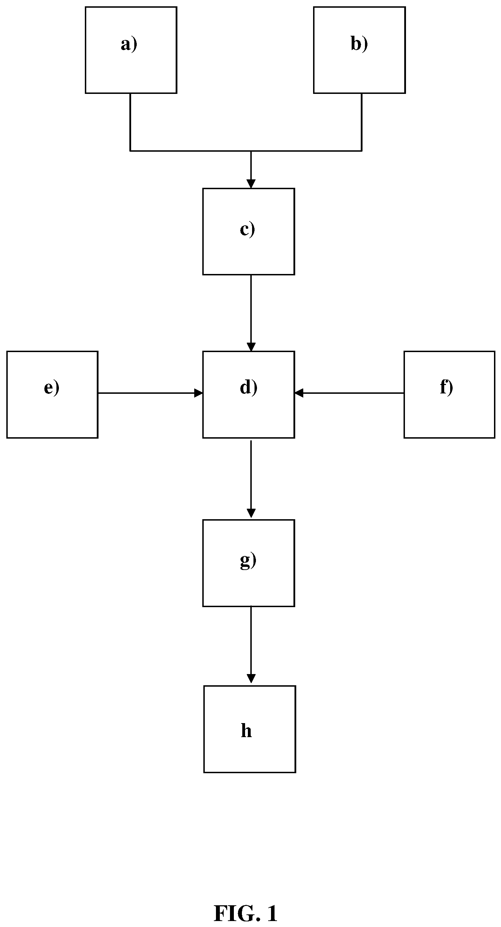

**FIG. 1** is a block-diagram of a method according to the invention.

### Best modes of carrying out the invention

With reference to **Fig. 1** a block diagram of a method according to the invention for the production of a mixture for stone products containing Ischia green tuff is shown in a schematic way.

The mixture obtained according to the method of the invention, or with different methods also of known type, may be used for manufacturing products of any kind, such as, by way of example, tables, benches, vases, bowls, plates or other containers, decorative elements, supports in general, blocks for dry stone walls, steps, gravestones, without particular limitations.

The method comprises a step **a)** of providing a first amount of Ischia green tuff in granular form and a step **b)** of providing a second amount of a second granular material having granulometry comparable to that of green tuff.

Subsequently (step **c)** part of the green granular tuff is mixed in water with the entire amount of the second granular material.

Preferably, the amount of water will be equal in weight to the amount of granular green tuff.

The compound is subjected to mixing by mechanical stirring (step **d),** for example, by a drill with whisk.

After obtaining a sufficiently homogeneous compound, a third amount of cement binders is introduced (step **e),** continuing with the blending until their dissolution.

At this point it is possible to introduce a fourth amount of at least one green pigment and microsilicates (step **f),** as well as of further additives having the aim to improve the workability properties of the mixture and/or the mechanical features of the finished product.

Finally, A step **g)** of introducing the remaining portion of granular green tuff is provided, with the possible addition of further water with percentage lower than that previously added and such as to obtain a mixture with water content ranging between 15% and 40% of the total weight of the mixture and preferably close to 25%.

The mixture thus obtained will be characterized by high malleability and may be used immediately or preferably after a limited resting period (step **h)** of a few minutes, for example between 3min and 10min.

Regardless of the method used for its production, the final mixture will have a content of Ischia green tuff in granular form between 20% and 50% of the total weight of the mixture. In an even more preferred embodiment, the green tuff will be between 35% and 45%.

In the case of the method disclosed above, the portions of green tuff used in the first stage of mixing in water (step **c**) and in the end mixing step (step **g)** may have substantially the same weight.

Its average particle size will be between 0.01mm and 3cm, blends of granules with nonuniform particle size being also adapted to be used.

The second material will preferably be an inert granular material of volcanic origin, for example light brown granular lapillus, with a particle size substantially similar to that of green tuff granules.

The use of light-brown lapilli allows to have a mixture of grains having sufficiently homogeneous staining but such as to create typical veining of natural stone, by increasing the aesthetic value of the product obtained with the mixture.

The second granular material will be present in an amount comprised between 1% and 10% of the total weight of the mixture and preferably between 3% and 7%.

The cementitious binder may be selected from white and/or gray powder binders and/or cement-based adhesives, with overall percentage comprised between 20% and 40% of the total weight of the mixture, preferably close to 30%.

The green pigment may be selected from iron oxide and/or green oxide, with the total pigment percentages lower than 0.5%.

Microsilicates will be present in an amount comprised between 0.5% and 3% of the total weight of the mixture.

Thickening agents may be used as additives, such as cellulose derivatives and/or starch derivatives for building industry and the like.

Additional additives, such as a cementitious latex, may be introduced to improve mechanical properties of the mixture, such as elasticity and wear resistance.

The additives will be present with a overall percentage lower than 1% of the total weight of the mixture.

From above it is clear that the mixture and the method according to the invention reach the intended object and in particular that of providing an ecological mixture of Ischia green tuff which allows to obtain, starting from a granular material, product quite similar from an aesthetic point of view to those resulting from the extraction of green tuff from the rocks but with improved workability and wear resistance.

The mixture and the method according to the invention are susceptible of numerous modifications and variations, all falling within the scope of the accompanying claims.

Even if the mixture and the method have been disclosed with particular reference to the attached figures, the reference numbers used in the description and in the claims are used to improve the intelligence of the invention and do not constitute any limitation to the scope of protection claimed.

## Claims

1. A mixture for producing stone materials, comprising a first predetermined amount of granules of Ischia green tuff mixed with a second amount of a second granular material selected into the group of materials of volcanic origin, said green tuff granules being bound to said second granular material with a third predetermined amount of cementitious binder, said mixture further comprising a fourth predetermined amount of at least one green pigment;
**characterized in that** said Ischia green tuff is used in granular form with granules having an average size between 0.01mm and 3cm, said second granular material having a particle size substantially similar to that of said granules of Ischia green tuff.

2. Mixture as claimed in claim 1, **characterized in that** said granules of green tuff are in amounts between 20% and 50% of the total weight of the mixture.

3. Mixture as claimed in claim 1 or 2, **characterized in that** said second granular material is light brown granular lapillus and is present in a quantity comprised between 1% and 10% of the total weight of the mixture.

4. Mixture as claimed in any preceding claim, **characterized in that** said green pigment is selected into the group comprising iron oxide and chromium oxide green.

5. Mixture as claimed in any preceding claim, **characterized in that** said binders are in an amount comprised between 20% and 40% of the total weight of the mixture, said mixture having a water content by weight between 15% and 40 % of the total weight of the mixture.

6. Mixture as claimed in any preceding claim, **characterized by** comprising silicate micro-silicates in an amount comprised between 0.5% and 3% of the total weight of the mixture.

7. Mixture as claimed in any preceding claim, **characterized by** comprising one or more thickening agents selected into the group comprising cellulose derivatives, starch derivatives for building in percentage less than 1% of the total weight of the mixture.

8. A method for producing a mixture for stone products containing Ischia green tuff, wherein said mixture is in aqueous base, comprising the following steps:
- providing an initial amount of Ischia green tuff in granular form;
- providing a second amount of a second granular material;
- mixing said first and said second amounts of granular materials with a third amount of cementitious binders, a fourth amount of at least one green pigment and micro-silicates;
**characterized in that** said Ischia green tuff is used in granular form with granules having an average size between 0.01mm and 3cm, said second granular material having a particle size substantially similar to that of said granules of Ischia green tuff.

9. Method as claimed in claim 8, **characterized in that** said first amount of Ischia green tuff is introduced into said mixture into two distinct steps, a first portion being introduced at the beginning and a second portion that is substantially similar in weight to said first portion being introduced after the mixing of said first portion with said third and fourth amounts.

## Patentansprüche

1. Eine Mischung zur Herstellung von Steinprodukten, bestehend aus einer ersten vorbestimmten Menge an Granulat aus grünem Ischia-Tuff, vermischt mit einer zweiten Menge eines zweiten körnigen Materials, das aus der Gruppe der Materialien vulkanischen Ursprungs ausgewählt ist, wobei das grüne Tuffgranulat mit einer dritten vorbestimmten Menge an zementartigem Bindemittel an das zweite körnige Material gebunden ist, wobei die Mischung ferner eine vierte vorbestimmte Menge mindestens eines grünen Pigments enthält;
**dadurch gekennzeichnet, dass** der genannte Ischia-Grüntuff in körniger Form verwendet wird, wobei die Körnung im Durchschnitt zwischen 0,01 mm und 3 cm liegt, wobei das zweite körnige Material eine im Wesentlichen ähnliche Partikelgröße wie die Körnung des genannten Ischia-Grüntuffs aufweist.

2. Mischung nach Anspruch 1, **dadurch gekennzeichnet, dass** das Grüntuffgranulat 20% bis 50 % des Gesamtgewichts der Mischung ausmacht.

3. Mischung nach Anspruch 1 oder 2, **dadurch gekennzeichnet, dass** das zweite granuläre Material hellbraunes, granuliertes Lapillus ist und in einer Menge von 1 % bis 10 % des Gesamtgewichts des Gemisches vorliegt.

4. Mischung nach einem vorhergehenden Anspruch, **dadurch gekennzeichnet, dass** das grüne Pigment aus der Gruppe bestehend aus Eisenoxid und Chromoxidgrün ausgewählt ist.

5. Mischung nach einem vorhergehenden Anspruch, **dadurch gekennzeichnet, dass** die Bindemittel in einer Menge von 20 % bis 40 % des Gesamtgewichts des Gemisches vorliegen und das Gemisch einen Wassergehalt von 15 % bis 40 Gew.-% aufweist.

6. Mischung nach einem vorhergehenden Anspruch, **dadurch gekennzeichnet, dass** es Silikatmikrosilikate in einer Menge zwischen 0,5 % und 3 % des Gesamtgewichts des Gemisches enthält.

7. Mischung nach einem vorhergehenden Anspruch, **dadurch gekennzeichnet, dass** sie ein oder mehrere Verdickungsmittel, ausgewählt aus der Gruppe Cellulosederivate und Stärkederivate, in einer Menge von weniger als 1 % des Gesamtgewichts der Mischung enthält.

8. Verfahren zur Herstellung einer Mischung für Steinprodukte mit Ischia-Grüntuff, wobei die Mischung auf wässriger Basis vorliegt, umfassend die folgenden Schritte:
- Bereitstellen einer ersten Menge Ischia-Grüntuff in granulierter Form;
- Bereitstellen einer zweiten Menge eines zweiten granulierten Materials;
- Mischen der ersten und der zweiten Menge granulierter Materialien mit einer dritten Menge zementärer Bindemittel, einer vierten Menge mindestens eines grünen Pigments und Mikrosilikaten;
**dadurch gekennzeichnet, dass** der Ischia-Grüntuff in granulierter Form mit einer durchschnittlichen Korngröße zwischen 0,01 mm und 3 cm verwendet wird und das zweite granulierte Material eine im Wesentlichen ähnliche Partikelgröße wie das Ischia-Grüntuff-Granulat aufweist.

9. Verfahren nach Anspruch 8, **dadurch gekennzeichnet, dass** die erste Menge Ischia-Grüntuff in zwei getrennten Schritten in die Mischung eingeführt wird, wobei zu Beginn eine erste Portion und nach dem Mischen der ersten Portion mit der dritten und vierten Menge eine zweite Portion, die im Wesentlichen dem Gewicht der ersten Portion entspricht, eingeführt wird.

## Revendications

1. Un mélange pour la fabrication de matériaux en pierre, comprenant une première quantité prédéterminée de granulés de tuf vert d'Ischia mélangés avec une seconde quantité d'un second matériau granulaire choisi dans le groupe des matériaux d'origine volcanique, lesdits granulés de tuf vert étant liés audit second matériau granulaire au moyen d'une troisième quantité prédéterminée de liant cimentaire, ledit mélange comprenant en outre une quatrième quantité prédéterminée d'au moins un pigment vert; **caractérisé en ce que** ledit tuf vert d'Ischia est utilisé sous forme granulaire avec des granulés ayant une taille moyenne comprise entre 0,01 mm et 3 cm, ledit second matériau granulaire ayant une granulométrie sensiblement similaire à celle desdits granulés de tuf vert d'Ischia.

2. Mélange selon la revendication 1, **caractérisé en ce que** lesdits granulés de tuf vert sont présents en quantités comprises entre 20% et 50% du poids total du mélange.

3. Mélange selon la revendication 1 ou 2, **caractérisé en ce que** ledit second matériau granulaire est un lapillus granulaire brun clair et est présent en une quantité comprise entre 1% et 10% du poids total du mélange.

4. Mélange selon l'une quelconque des revendications précédentes, **caractérisé en ce que** ledit pigment vert est choisi dans le groupe comprenant l'oxyde de fer et l'oxyde de chrome vert.

5. Mélange selon l'une quelconque des revendications précédentes, **caractérisé en ce que** lesdits liants sont présents en une quantité comprise entre 20 % et 40 % du poids total du mélange, ledit mélange ayant une teneur en eau en poids comprise entre 15 % et 40 % du poids total du mélange.

6. Mélange selon l'une quelconque des revendications précédentes, **caractérisé en ce qu'**il comprend des microsilicates de silicate en une quantité comprise entre 0,5 % et 3 % du poids total du mélange.

7. Mélange selon l'une quelconque des revendications précédentes, **caractérisé en ce qu'**il comprend un ou plusieurs agents épaississants choisis dans le groupe comprenant des dérivés de cellulose et des dérivés d'amidon pour la construction, en pourcentage inférieur à 1 % du poids total du mélange.

8. Procédé de production d'un mélange pour produits en pierre contenant du tuf vert d'Ischia, ledit mélange étant à base aqueuse, comprenant les étapes suivantes :
- fournir une quantité initiale de tuf vert d'Ischia sous forme granulaire ;
- fournir une seconde quantité d'un second matériau granulaire ;
- mélanger lesdites première et seconde quantités de matériaux granulaires avec une troisième quantité de liants cimentaires, une quatrième quantité d'au moins un pigment vert et des microsilicates ;
**caractérisé en ce que** ledit tuf vert d'Ischia est utilisé sous forme granulaire avec des granulés ayant une taille moyenne comprise entre 0,01 mm et 3 cm, ledit second matériau granulaire ayant une granulométrie sensiblement similaire à celle desdits granulés de tuf vert d'Ischia.

9. Procédé selon la revendication 8, **caractérisé en ce que** ladite première quantité de tuf vert d'Ischia est introduite dans ledit mélange en deux étapes distinctes, une première portion étant introduite au début et une seconde portion, substantiellement similaire en poids à ladite première portion, étant introduite après le mélange de ladite première portion avec lesdites troisième et quatrième quantités.
